# EUROPEAN PATENT SPECIFICATION

(11) **EP 2 206 942 B1**
(45) Date of publication and mention of the grant of the patent: **12.10.2011**
(21) Application number: 09150369.8
(22) Date of filing: 12.01.2009
(51) Int. Cl.: F16L 21/03

(54) **Pipe part provided with a spigot end part**
Rohrteil mit einem Zapfenendstück
Partie de tuyau dotée d'une partie d'extrémité saillante

(43) Date of publication of application: 14.07.2010
(73) Proprietor: Wavin B.V., 8011 CW Zwolle (NL)
(72) Inventor: Brookman, Geert, 9491AD Zeijen (NL); Bristow, Adrian David, Carlton, North Yorkshire DN14 9PH (GB); Sutcliffe, Steven, Wakefield, West Yorkshire WF2 0JZ (GB); Fisher, Raymond, Doncaster, South Yorkshire DN5 8TB (GB); Fardon, Mark, Mansfield, Nottinghamshire NG20 9PP (GB); Hall, Joe Benjamin, Ridgeway, Sheffield S12 3XJ (GB)
(74) Representative: HOFFMANN EITLE

(56) References cited:
- EP-A- 1 589 272
- WO-A-96/17200
- DE-A1- 19 827 681
- GB-A- 2 190 717

## Description

### Field of the invention

The invention relates to a pipe part provided with a spigot end part which is designed for insertion into a socket end part of a second pipe part. The socket end part is on the inside normally provided with sealing means such as a gasket or a sealing ring. The spigot end part is on the end normally provided with a part that is chamfered on the outside for the purpose of deformation of the sealing ring during the insertion of the spigot end part into the socket end part.

The invention also relates to a method for producing such a pipe part.

### Background of the invention

US 2002/0038952 A1 shows a pipe part having the external surface of the chamfered part in the shape of a truncated cone. This has the disadvantage that during the insertion of the spigot end part into a socket end part provided with the sealing ring, the insertion force is often regarded as undesirably great. This great insertion force is the result of the fact that during the insertion of the spigot end part the sealing ring has to be uniformly deformed round the entire circumference. During this process the internal diameter of the sealing ring is increased, against elastic forces. This contributes to a large extent to the insertion force, which increases as the insertion advances. This is the result of a response of the sealing ring to resist more strongly further deformation as the deformation progresses.

The cone-shaped external surface of the spigot end part ensures that the insertion force steadily increases, making the insertion a tiresome and poorly manageable process.

EP 1 589 272 A1 also discloses a pipe part having a chamfered part provided on the outside. The chamfered part comprises at least two regions which are distributed uniformly around a circumference and in which the external surface lies radially inwards. In this way it is ensured that during the insertion of the spigot end part the sealing ring is deformed sector by sector with, according to EP 1 589 272 A1, the result that the force required for this deformation is applied in a manner distributed over time, and the required insertion force is reduced.

It is an object of the invention to provide an alternative pipe part provided with a spigot end part which can be inserted into a socket end part and which is at least as easily insertable into the socket end part as the spigot end parts discussed above, if not more manageably insertable.

### Summary of the invention

The object of the invention is met by a pipe part as defined in claim 1. Such a pipe part is provided with a spigot end part which is designed for insertion into a socket end part having on the inside a sealing ring. The spigot end part has an outer end structure which comprises in circumferential direction in alternating fashion radially inwardly situated sections, and, relative to these inwardly situated sections, radially outwardly directed protuberances. Each of the protuberances coincides at at least one point with an imaginary cone which shares its axis with the axis of the pipe part and which has its base crossing the pipe part. At least one of the protuberances has a protuberance-shape which has a mis-match with the shape of the imaginary cone. The outer end structure is provided with at least one end-stage indicator for producing tactile and/or audible feedback to a person when insertion of the spigot end part into the socket has reached an end stage. The end-stage indicator comprises at least one axially directed projection or recess.

In the following, an insertion direction is referred to as a distal direction. The opposite direction is referred to as a proximal direction.

A pipe part according to the invention allows on insertion of the spigot end part into a socket end part for local deformation of the sealing ring, so that the sealing ring will initially at some positions deform to a larger extent than the extent to which the sealing ring deforms at other positions. Higher deformation of the sealing ring is likely to occur at positions of contact with the protuberances. The sealing ring is therefore not simply compressed uniformly between the spigot end part and the inside of the socket end part, but compressed non-uniformly so that various material properties of the sealing ring are deliberately explored in a variety of directions. This allows the sealing ring to respond flexibly to the insertion of the spigot end part in the socket end part.

Furthermore, the sealing ring will adapt to a shape that fits to the annular shape defined by the inside of the socket end part and the outer end structure of the spigot end part. The local deformation of the sealing ring, different at different positions, may provide feedback to a person inserting the spigot end part into the socket end part, so that, particularly when the person has gained experience with insertion of the spigot end part into a socket end part, it will be clear to such a person whether the handling needs to be adapted or can be continued as already being carried out. This facilitates the insertion process.

These different deformations at different positions are not necessarily also distributed over time. It is of course possible though that the outer end structure is further such that on insertion, the deformation to the sealing ring is also distributed over time, providing further feedback to a person inserting the spigot end part into the socket end part. The insertion force needed for advancement of the insertion reveals the information about the stage reached.

The mismatch of the protuberance shape with the shape of the imaginary cone provides the protuberance with an extra characteristic which may provide further feedback and thus guidance to a person inserting the spigot end into a socket end part. The insertion force needed will "contain information" that originates from the protuberance shape, allowing for "monitoring" the stages of insertion of the spigot end part through the sealing ring.

It will be appreciated that the design possibilities for a spigot end part have due to the invention greatly improved. Earlier on, on the basis of the prior art, it was perceived that the physical space available for the design of the spigot end part (in radial direction small and limited by the thickness of the wall of the pipe, in axial direction small and limited due to a general desire to keep connections small) would straightaway prescribe the shape of the spigot end part. According to the insight provided by the invention, other designs are possible for the pipe part, providing advantages not only for use but also for manufacturing such a pipe part.

Preferred embodiments of the pipe part according to the invention are defined in the sub-claims.

### Brief description of the drawing

The invention will further be explained in greater detail in the following description of a non-limiting embodiment with reference to the drawing, in which:
Fig. 1 provides schematically a perspective view of a pipe provided with a spigot end part;
Fig. 2 shows schematically a side view of the pipe shown in Fig. 1;
Fig. 3 shows schematically a top view of the pipe shown in Fig. 1;
Fig. 4 shows schematically a view of a cross section taken along the line A-A as shown in Fig. 3;
Fig. 5 shows schematically a view of a cross section taken along the line B-B as shown in Fig. 3;
Fig. 6 shows a side view of an insert sleeve provided with a part pipe as shown in Fig. 2;
Fig. 7 shows schematically a view of a cross section of an insert sleeve with a pipe part as shown in Fig. 4;
Fig. 8 shows schematically a view of a cross section of a part of an insert sleeve with a pipe part as shown in Fig. 5;
Fig. 9 provides schematically a perspective view of an embodiment of a pipe part provided with a spigot end part in accordance with the invention;
Fig. 10 shows schematically a side view of the embodiment shown in Fig. 9;
Fig. 11 shows schematically a top view of the embodiment shown in Fig. 9;
Fig. 12 shows schematically a view of a cross section taken along the line A-A as shown in Fig. 11;
Fig. 13 shows schematically a view of a cross section taken along the line B-B as shown in Fig. 11.

### Detailed description of an embodiment of the invention

In the following description, like features are provided with like references.

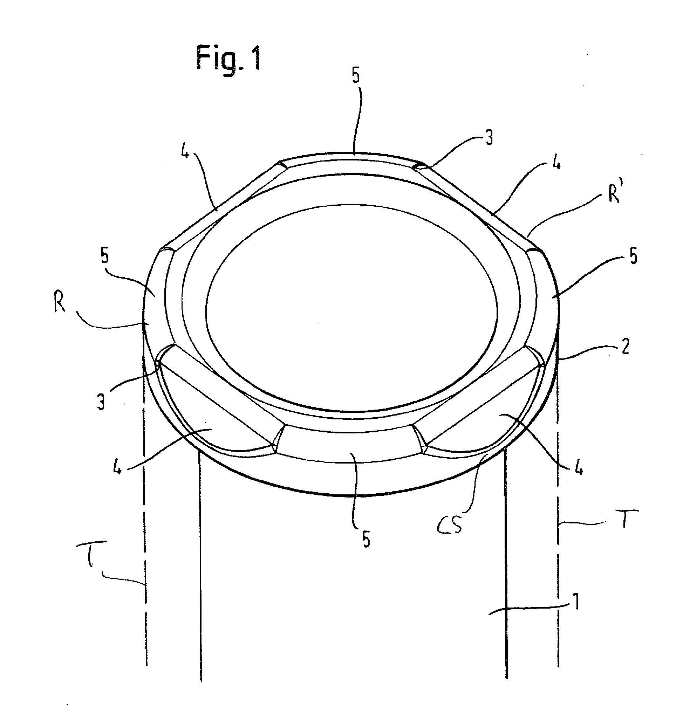

Fig. 1 shows a perspective view of a pipe part 1 provided with a spigot end part 2 which is designed for insertion into a socket end part (not shown) having on the inside a sealing ring (not shown). The spigot end part 2 has an outer end structure 3 which comprises in circumferential direction radially inwardly situated sections 4, as well as, radially outwardly directed protuberances 5. The protuberances 5 are radially outwardly directed relative to the inwardly situated sections 4. The outer end structure 3 comprises in circumferential direction the inwardly situated section 4 and the outwardly directed protuberances 5 in an alternating fashion.

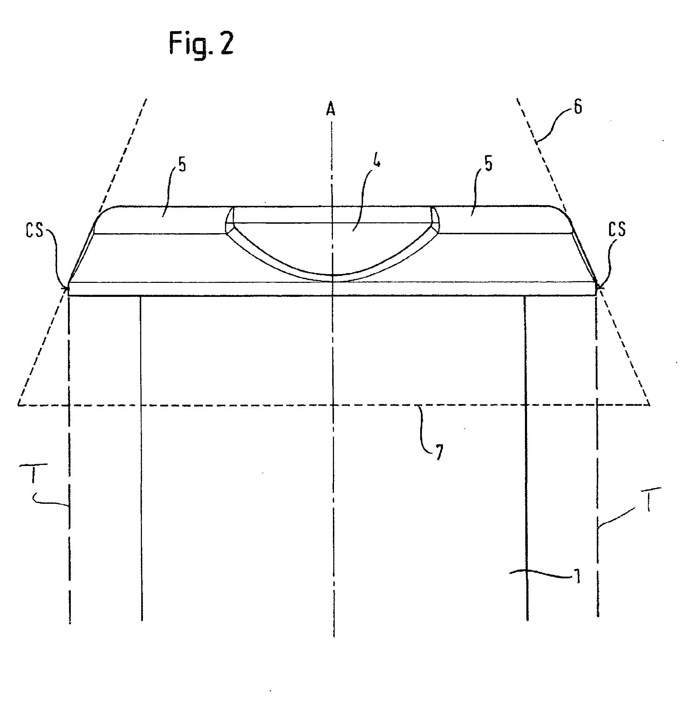

From Fig. 2, a side view of the pipe part shown in Fig. 1, it is clear that an imaginary cone 6 can be visualized as shown. The cone 6 shares its axis with the axis A of the pipe part 1. A base 7 of the imaginary cone 6 crosses the pipe part 1.

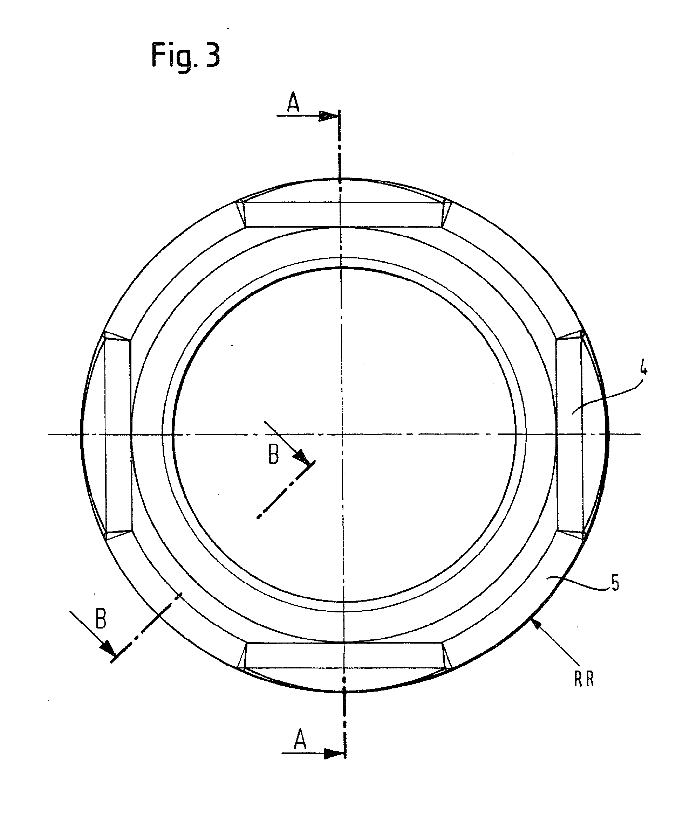

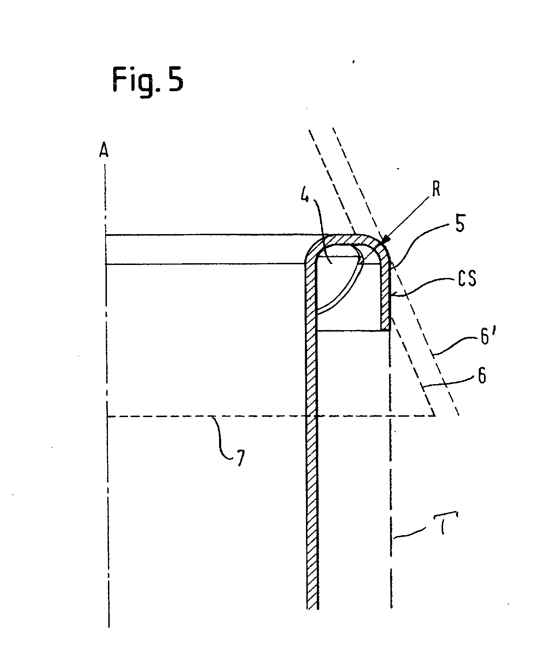

As more clearly shown in Fig. 5, a cross sectional view along the lines B-B in Fig. 3, each of the protuberances 5 coincides at at least one point with the imaginary cone 6. The number of points coinciding with the imaginary cone depends on the position and dimensions of the imaginary cone, as well as on the shape of the protuberance.

Rather than merely having points of the protuberance 5 coinciding with the imaginary cone 6, it will often apply that the protuberance 5 has at least a part (i.e. more than just a point) in common with the imaginary cone 6. Such a part may be a plurality of points which are joined together.

Although Fig. 5, a cross-sectional view, clearly shows that the protuberance 5 coincides, in this particular view, at two points with the imaginary cone 6, it will not be difficult to envisage the possibility of an imaginary cone of which a part is schematically shown by dashed line 6', with which the protuberance 5 would coincide at one point. The shape of the protuberance 5 determines further the number of points coinciding with the imaginary cone 6, as easily envisageable. For instance, the protuberance may have a wavy surface facing a radially outward direction. Such a wavy protuberance surface crosses the imaginary conical surface many times.

The protuberance 5 as shown in Fig. 5 has a protuberance-shape which has a mis-match with the shape of the imaginary cone 6 (or 6') . In other words, the protuberance 5 as shown in Fig. 5 has at least a part which does not coincide with the imaginary cone 6 (or 6'). Although it is indeed possible that this mis-match of the protuberance-shape with the imaginary cone 6 (or 6') only applies to one of the protuberances 5, it is preferred that each of the protuberances 5 has a protuberance-shape which mis-matches the shape of the imaginary cone 6 (or 6').

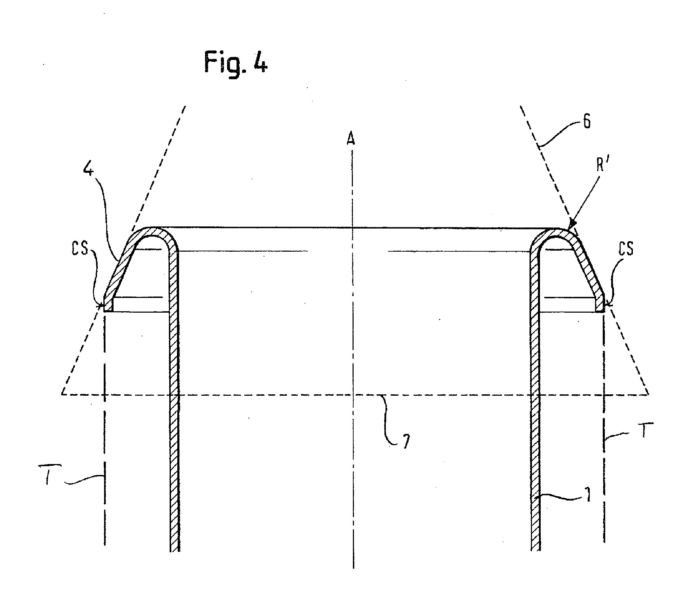

From Fig. 2, but even more so from Fig. 4, a view onto a cross section taken along the lines A-A in Fig. 3, it becomes apparent that, although the sections 4 are radially inwardly situated relative to the radially outwardly directed protuberances 5, it is very well possible that the sections 4 also have one or more points coinciding with an imaginary cone 6. However, it is equally possible that the sections 4 are radially inwardly situated relative to the imaginary cone 6 and have no points at all coinciding with the imaginary cone.

Should the imaginary cone for instance be represented by a cone as shown in Fig. 5 by dashed lines 6', then the inwardly situated sections 4 will not at any point coincide with this cone 6'. In that case sections 4 will be inwardly situated relative to cone 6'.

A part of the protuberance-shape may have a cylindrical surface CS, as shown in Fig. 5. From Fig. 4 it is clear in a radial cross section that also proximal from the inwardly situated sections 4, the spigot end part 2 may comprise a part of a cylindrical surface CS. This surface may be part of a cylinder.

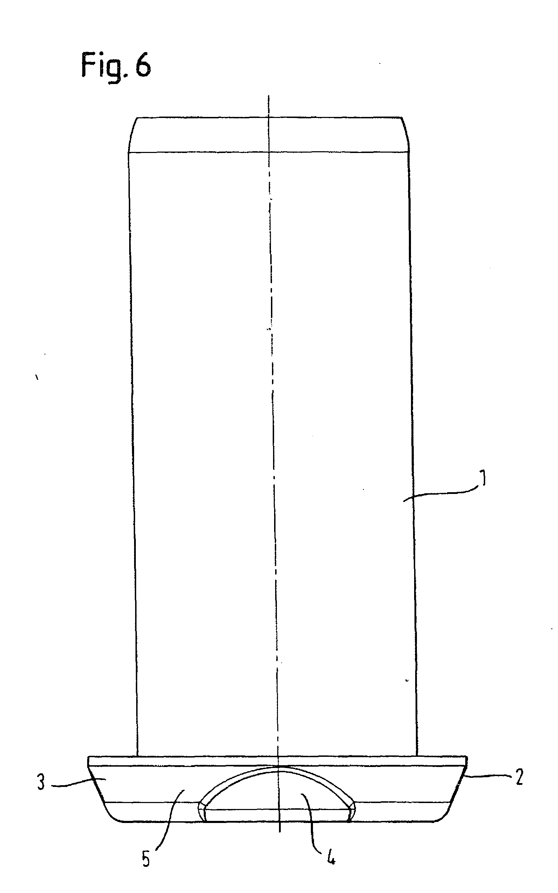

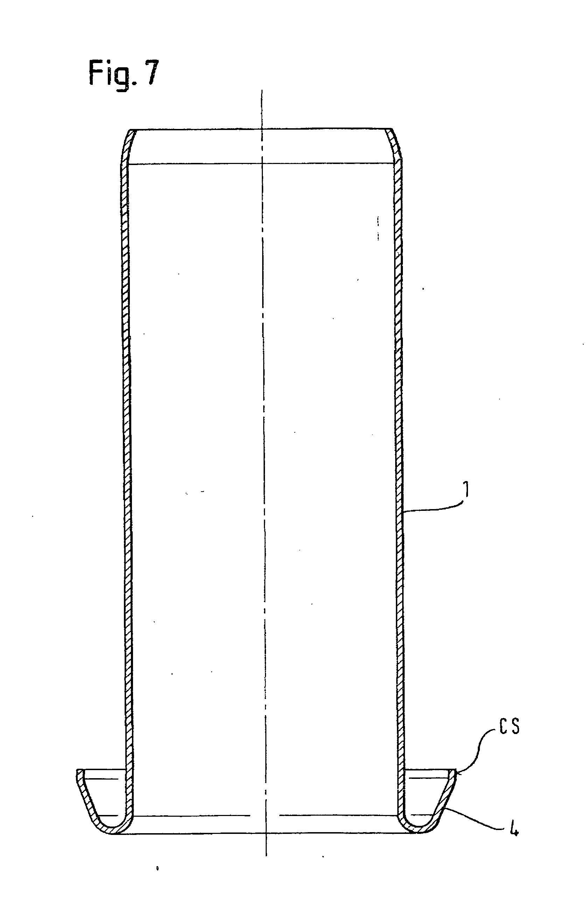

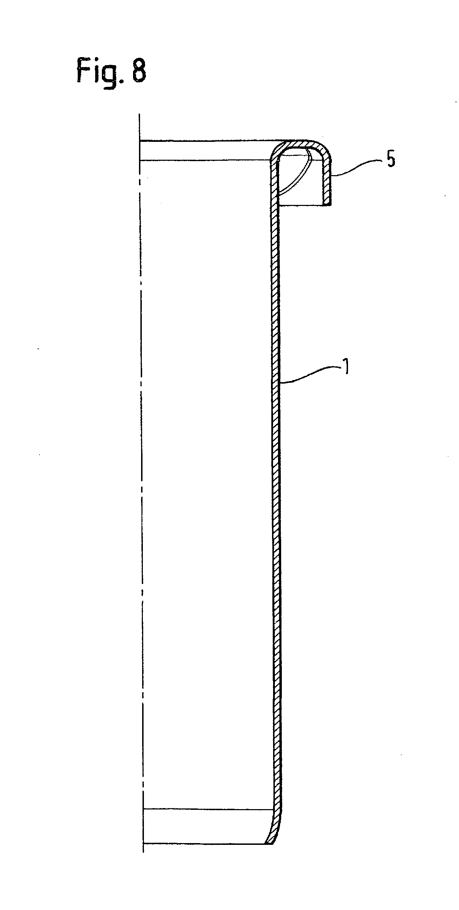

From Fig. 3 (a top view), it is also clear that a cross section of the protuberance 5, taken across the axial direction of the pipe part, may comprise a part of a circle. This is pointed at by arrow RR in Fig. 3. As preferable and visible in each of the Figures 1-5, proximal from the outer end structure 3, the spigot end part 2 has a cylindrical surface CS to match an outer surface of a long pipe of which the pipe part may form a part. Alternatively, the pipe part 1 may form part of a support sleeve for insertion into a long pipe, for facilitating insertion and maintaining a round end of that long pipe. Views of a complete support sleeve are shown in figs. 6-8. This cylindrical surface CS may even be a part of a cylinder which passes the sealing ring on insertion.

In the proximal direction, the spigot end part 2 will thus gradually have an outer surface that is cylindrical and preferably circular. The stress-strain situation is uniformly distributed within the sealing ring if that outer surface has the shape of a cylinder.

It will be appreciated that the spigot end part 2 as shown in the figures can also be part of a so-called support or insert sleeve which can be inserted into the end of a pipe and as such provide the pipe with a spigot end part. However, it is possible that a pipe part is provided with a spigot end part by "sculpturing" the spigot end part at the end of a pipe. In Fig. 1, 2, 4 and 5 interrupted line T shows where in such a variant the outer wall of the pipe (or tube) would be. Here, the spigot end part may be an integral part of the pipe.

As displayed in Figures 1-5, in this pipe part 1 each protuberance 5 is identical in shape. This means that no part of the sealing ring will upon contact with a protuberance 5 be subjected to a mechanical stress-strain situation which is more severe than at the position where any of the other protuberances interact with the sealing ring. However, it is also possible that at least two of the protuberances 5 are mutually different in shape. For such a pipe part 1 it applies that at one location of the sealing ring the mechanical stress-strain situation will be unique, providing at that location different resistance against insertion of the spigot end part, as can be felt by a person inserting the spigot end part in the socket end part. This provides feedback to such a person on the progress (or lack thereof) of the insertion.

The spigot end part as displayed by Figures 1-4 shows that each of the radially inwardly situated sections 4 comprises a flat surface. It is of course possible that this only applies to one or a few of the radially inwardly situated sections 4.

The radially inwardly situated sections 4 are not necessarily provided with a flat surface. It is for instance possible that one or a few of these sections 4, or indeed all of these sections 4, comprise a curved surface, radially inwardly, or outwardly, as seen in circumferential direction and/or as seen in axial direction.

It is further possible that one or more of the radially inwardly situated sections is provided with through openings. This means that the friction between the outer end structure 3 and the sealing ring is at least at those positions reduced due to the fact that there is no material in the through opening for the sealing material to rub against.

As visible from Fig. 1-4, each of the radially inwardly situated sections 4 comprise a surface which extends in distal direction radially inward. This facilitates inserting the spigot end part 2 into the socket end part as, at least at a position of the inwardly situated sections 4, the insertion forces will initially be minimal. This also allows for "wiggling" of the spigot end part in the socket end part, in the sense of self-centering the spigot end part so that the spigot end part approaches the sealing ring coaxially and the sealing ring will not be dislodged.

As clearly visible from Fig. 5, a cross section of the protuberance-shape taken along the axial direction A of the pipe part 1, comprises a part of a circle. This is indicated by arrow R in Fig. 5. This ensures that the part of the protuberance which will initially be in contact with the sealing ring, will not penetrate the material of the sealing ring but rather slide along the sliding ring whilst deforming the sealing ring. Also a cross section taken along the axial direction of the pipe part at a position of an inwardly situated section 4, as shown in Fig. 4, may comprise a part of a circle. This is indicated in Fig. 4 by arrow R'. It can thus also be avoided that at this position the spigot end part penetrates the sealing ring, rather than moving along the sealing ring whilst deforming (slightly) the sealing ring. Preferably, the curvatures at the positions shown by arrow R' in Fig. 4 and arrow R in Fig. 5 gradually, but smoothly, run into each other in circumferential direction so that there is along the complete circumference a radius, be it varying slightly in numerical value.

As also shown in Fig. 4 and 5, the very same would apply to an inner rim of the spigot end part, although it is unlikely that this part will penetrate the sealing ring.

Smoothing, or rounding off, parts of the outer end structure which are likely to be the first parts of the structure hitting the sealing ring, is advantageous as it reduces the probability that the spigot end part gets stuck on insertion. Also undesired disposition of the sealing ring is less likely to occur when parts of the outer end structure are smoothed or rounded off. Angular transitions may cause penetration of the sealing ring material, blocking insertion of the spigot end part and possibly even damaging the sealing ring to an extent that the sealing can no longer be guaranteed.

Without wishing to be bound by any theory, the insertion of this spigot end part requires an insertion force which can approximately be characterized as follows. Initially, the part of the protuberances 5 having a radius R will contribute most to the insertion force as at these positions the sealing ring will initially have to undergo the largest deformation. At the part of the inwardly situated sections 4 having radius R', deformation of the sealing ring will be relatively small, if needed at all. Hence, the insertion force will initially vary along the circumference of the spigot end. Once the parts of the protuberances 5 having a radius R have passed the sealing ring, the contact area between the protuberances 5 and the sealing ring does no longer change in shape. Local adaption of the sealing ring where it is in contact with the protuberances 5 is then no longer required.

However, the inwardly situated sections 4, on further insertion, require progressively more adaption of the sealing ring. Hence, at this stage, the overall insertion force is felt to be a result of a force which increases at positions along the circumference of the spigot end. The positions at which the force increases are different though as compared with the positions at which the highest forces were applicable in the initial stage of the insertion.

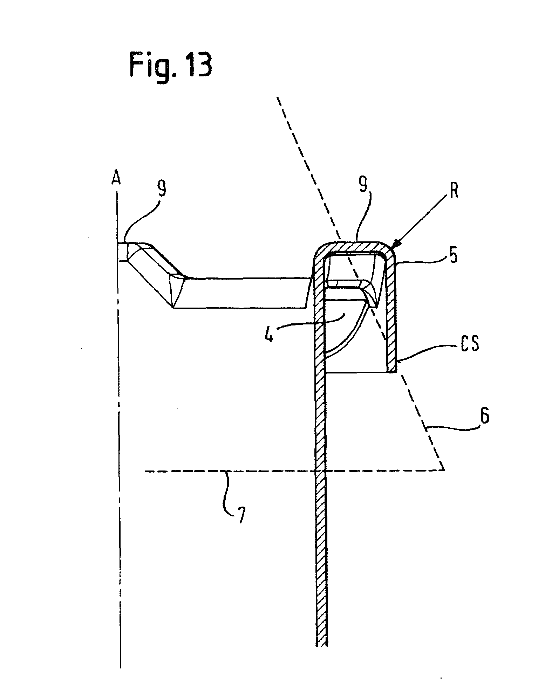

At some stage, upon further insertion, the part of the spigot end part that is in contact with the sealing ring, will no longer have any variations along its circumference. Also this will result in a change in insertion force, possibly toward a final, substantially constant value. Hence, during insertion of the spigot end part 2 according to Fig. 1-5 there are three distinct stages, with varying forces in terms of time and position. One can easily imagine that it will, for instance, be possible to make the protuberances 5 such that more distinct stages are noticeable upon insertion. A "wavy" outer surface of the protuberances 5 may for instance allow a person inserting the spigot end part "to count the waves" in the required insertion force, therewith knowing which stage of insertion has been reached. A "single wave" may be provided by a radius R, as shown in Fig. 5 and 13, keeping the axial length over which the information-generating-design extends, advantageously limited.

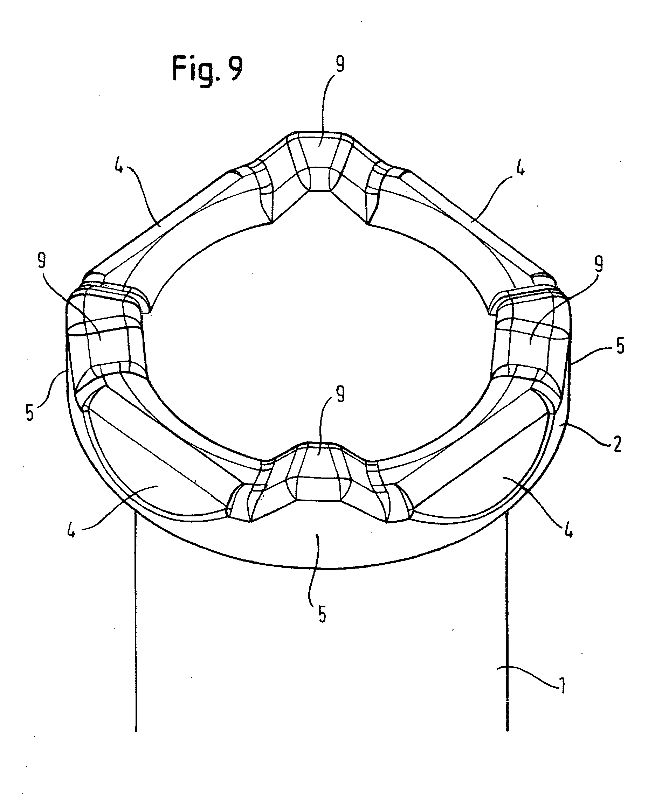

Fig. 9 shows a perspective view of an embodiment of a pipe part 1 provided with a spigot end part 2 in accordance with the invention. In this case the outer end structure 3 is provided with four end-stage indicators 9 for providing tactile and/or audible feedback to a person when insertion of the spigot end part 2 into the socket (not shown) has reached an end stage. In the embodiment shown in Fig. 9, each of the end-stage indicators 9 comprises an axially directed projection 9. As shown, the end-stage indictor 9 is preferably situated at a position along the circumferential direction where also a radially outwardly directed protuberance 5 is situated. However, it is not inconceivable that an insertion indicator 9 is situated along the circumferential direction at a position where an inwardly situated section 4 is positioned.

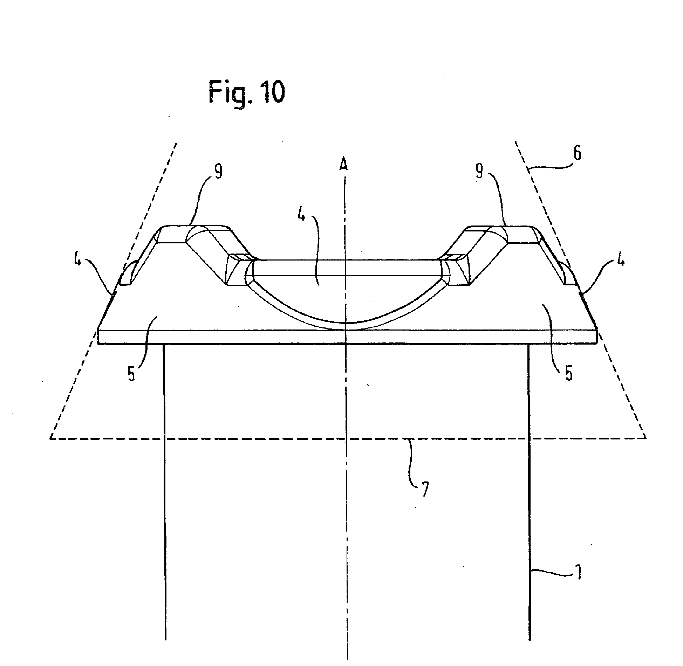

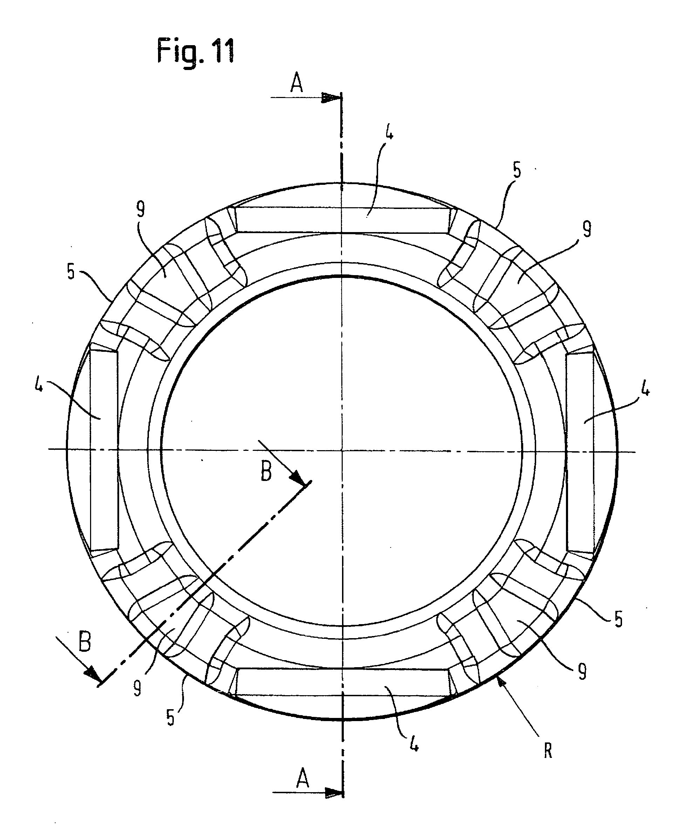

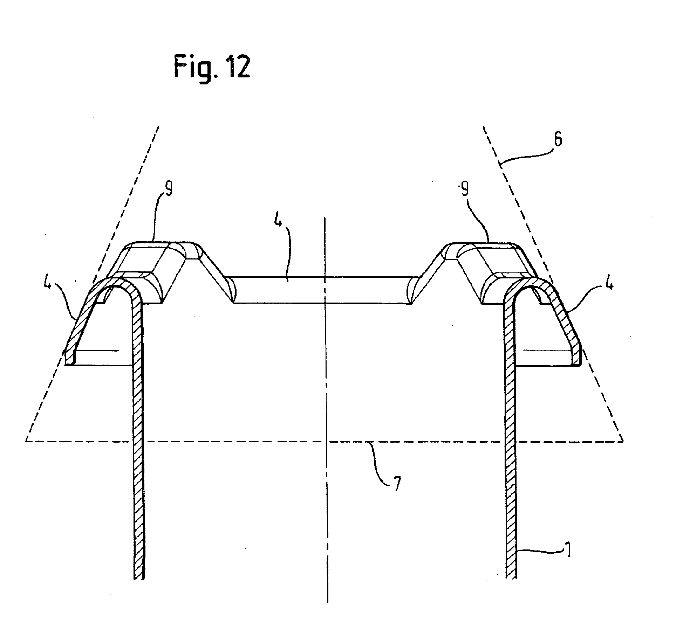

Fig. 10 shows schematically a side view of the embodiment shown in Fig. 9. When compared with Fig. 2, it is clear that Fig. 10 has in addition to the otherwise corresponding Fig. 2 the end-stage indicators 9, embodied by the axially directed projections. Turning to Fig. 11, a schematic top view of the embodiment shown in Fig. 9, it is clear that the features as described above when discussing Fig. 3, equally apply to Fig. 11. Similarly, from a comparison between Fig. 12 and Fig. 4 it is clear that the description of Fig. 4 equally applies to the description of Fig. 12. Finally, it is clear from a comparison between Fig. 13 and Fig. 5 that the description of Fig. 5 is equally useful for describing Fig. 13.

It is, as will be explained below, very possible that the end-stage indicator 9 itself provides tactile and/or audible feedback to a person when insertion of the spigot end part 2 into a socket has reached an end stage of insertion. However, it is preferred to have arrangements in the socket to better define a predetermined end stage of insertion and to optimize tactile and/or audible feedback. In a preferred embodiment is the pipe part 1 according to the invention for that purpose associated with a particular socket. Such a socket is designed for insertion of the spigot end part into a socket end part of that socket. On the inside such a socket end part is provided with a sealing ring. The inside of the socket may also be adapted to interfere mechanically with the end-stage indicator 9 to optimize its performance. Examples of an assembly of a spigot end part and a socket end part designed to enable one to judge when the spigot end part is fully inserted in the socket end part, using an end-stage indicator, is described in WO 96/17200 which refers to the end-stage indicator 9 in terms of an insertion indicator.

For a more detailed description of possible ways of the end-stage indicator interacting with an associated socket, the reader is referred to WO 96/17200 which, although earlier, also originated from the present applicant.

We now turn back to the present invention, and more in particular to the way the embodiment works. As indicated above, the second embodiment has the end-stage indicators as embodied in the axially extending projections 9. In the example shown, the positions and dimensions of the projections 9 are such that some interference may take place within the early stages of the insertion, given that the projections 9 extend radially up to a position where the protuberances 5 have a part with radius RR. In other words, in the example, the position and dimensions of the projection 9 are such that these also require (slight) deformation of the sealing ring in the socket. Hence, the insertion force needed may be affected by the presence of the end-stage indicators 9. This may provide an additional stage, reflected in the insertion force needed, for the earlier stage of insertion.

However, it is also possible to have the projections 9 such that no significant interference with the sealing ring will take place and that, effectively, the projections 9 have no bearing on the insertion force.

It is to be borne in mind that a socket of a pipe-end part usually has an internal "stopper structure" which is arranged to prevent a continuation of the insertion. This structure may comprise one or more abutment planes inside the socket. It is also not inconceivable that the socket has internally a funnel-like shaped structure, so that due to a (sudden or gradual) narrowness of the socket end part further insertion of the spigot end part becomes impossible.

The projections 9 will in an end stage of the insertion reach contact with this internal "stopper-structure" of the socket. The projections 9 may make a sound once this contact is reached, particularly if a person inserting the spigot end part 2 into the socket rotates the spigot end part relative to the socket. It is also possible that such interaction of the projections 9 with the internal "stopper-structure" of the socket can recognizably be felt and identified as a signal that further insertion in the axial direction is not possible and that the end stage of the insertion has been reached, i.e. the insertion is completed. The projections 9 may generate vibrations due to a "stick-slip" phenomenon occurring upon rotating the spigot end part within the socket. Also such phenomena may provide tactile and/or audible feedback.

Interestingly, the end stage indicator 9 may also be embodied by a recess (not shown) instead or in addition to the projections 9. Such recesses may also be axially directed and may effectively be formed by projections 9 extending to a larger extent in a circumferential direction, without abutting each other, so that a recess is formed between such projections. It may also be that the recesses are actually formed in a pipe part 1 as shown in Fig. 1-8, in particular in one or more of the protuberances thereof, and extend in a more proximal direction of the spigot-end part 2. Upon reaching a "stopper-structure" within a socket end part, the presence of the recesses may also lead to tactile and/or audible feedback. It may for instance be the lack of friction upon rotating within the socket, as a result of the recesses and/or resonance of a sound in such recesses, which as such give feedback about the completion of the insertion.

Of course, as indicated above, the socket into which the spigot end part 2 may be inserted has, preferably, an internal structure to even better define the end stage of insertion and to optimize the tactile and/or audible feedback. WO 96/17200 provides examples of such structures and of such ways of optimizing the performance of the end-stage indicator 9.

The projections 9 as shown in the embodiment of a spigot end part in accordance with the present invention may be shaped as preferred. A more angular projection 9 but also a more dome-shaped projection 9, is possible. The dimensions, positions and number of projections 9 can be different from the embodiment shown. It is also possible that only one or a few of the protuberances 5 are provided with projections 9. For further guidance, the reader is again referred to WO 96/17200.

It is possible to make a spigot end part 2 according to the invention by machining a pipe part. However, surprisingly, it has also turned out to be possible to make the outer end structure 3 of a folded or bent sheet-shaped metal. Such sheet-shaped metal may even be an endless sheet, such as a metal tube. It is also possible to make such an outer end structure 3 by mold-pressing such sheet-shaped metal. In general, the outer end structure 2 can be made by shaping a sheet-shaped metal.

The complete spigot end part 2 can be made by shaping a sheet-shaped metal, and indeed, a complete pipe part 1 or support sleeve as shown in Figs. 6-8 can be made by shaping sheet-shaped metal. This allows for a relatively easy and cheap production process.

Advantageously, such shaping methods provide the outer end structure 3 naturally with rounded off edges. To obtain such rounded edges with a machining process would require extra attention and thus more costs.

The invention is not limited to the embodiment described above. Many variations are possible. The pipe part can be made of materials such as plastic or metal or combinations thereof. Even a ceramic material is not excluded. Although it is possible and even preferred that the outer end structure is made from a sheet-shaped material, it is not inconceivable that other techniques based on machining, molding, casting, or any combinations of these techniques are employed for producing a pipe part according to the invention.

The number of protuberances 5 and inwardly situated sections 4 can freely be chosen. The dimensions can on the basis of routine engineering considerations be optimised for each purpose. As guidance, a reference is made to Figs. 6-8 which show a pipe part as part of a complete insert sleeve. Preferred dimensions are provided in the Figures. For certain applications, the dimensions provided, or the ratio of certain dimensions, may be preferred.

However, the thickness of the pipe wall into which the pipe end part, i.e. the insert sleeve to be inserted, as well as the dimensions of the socket end part, may lead to variations in preferred dimensions.

The transition from an inwardly situated section 4 to a protuberance 5 appears from Fig. 1 to be angular, i.e. somewhat abrupt. However such transitions may also be gradual and smooth.

The protuberances themselves may have a shape different from those shown. It is for instance possible that a step is incorporated in the protuberance-shape, so that more clearly feedback is given to a person who manually inserts the spigot end part into the socket end part.

Each of these modifications and variations are understood to fall within the scope of the appended claims.

## Claims

1. Pipe part (1) provided with a spigot end part (2) which is designed for insertion into a socket end part having on the inside a sealing ring, the spigot end part having an outer end-structure (3) which comprises in circumferential direction in alternating fashion radially inwardly situated sections (4), and, relative to these inwardly situated sections (4), radially outwardly directed protuberances (5), wherein each of the protuberances (5) coincides at at least one point with an imaginary cone (6) which shares its axis with the axis of the pipe part (1) and which has its base crossing the pipe part (1), at least one of the protuberances (5) having a protuberance-shape which has a mis-match with the shape of the imaginary cone (6), wherein the outer end-structure (3) is provided with at least one end-stage indicator (9) for providing tactile and/or audible feedback to a person when insertion of the spigot end part (2) into the socket has reached an end stage and wherein the indicator (9) comprises at least one axially directed end-stage projection or recess.

2. Pipe part (1) according to claim 1, wherein each of the protuberances (5) has a protuberance-shape which has a mis-match with the shape of the imaginary cone (6).

3. Pipe part (1) according to claim 1 or 2, wherein a part of the protuberance-shape matches a part of a cylindrical surface (CS).

4. Pipe part (1) according to any one of the previous claims, wherein a cross-section of the protuberance-shape, taken across the axial direction of the pipe part (1) comprises a curve, preferably a part of a circle.

5. Pipe part according to any one of the previous claims, wherein a cross-section of the protuberance-shape, taken radially along the axial direction of the pipe part (1) comprises a curve, preferably a part of a circle.

6. Pipe part (1) according to any one of the previous claims, wherein the spigot end-part (2) proximal of the outer end-structure (3) comprises an outer surface having the shape of a cylinder.

7. Pipe part (1) according to any one of the previous claims, wherein each protuberance (5) is identical in shape.

8. Pipe part (1) according to any one of the previous claims, wherein at least one of the radially inwardly situated sections (4) comprises a through-opening.

9. Pipe part (1) according to any one of the previous claims, wherein at least one of the radially inwardly situated sections (4) comprises a surface which extends in distal direction radially inward.

10. Pipe part (1) according to any one of the previous claims, wherein at least one of the radially inwardly situated sections (4) comprises a flat surface.

11. Pipe part (1) according to any one of the previous claims, wherein at least one of the radially inwardly situated sections (4) comprises a curved surface.

12. Pipe part (1) according to any one of the previous claims, wherein the outer end-structure (3) is made of folded or bent sheet-shaped metal.

13. A method for producing a pipe part (1) according to any one of the previous claims, wherein the method comprises shaping a sheet-shaped metal for making the outer end-structure (3).

## Patentansprüche

1. Rohrteil (1), bereitgestellt mit einem Zapfenendstück (2), das zum Einführen in ein Rohrmuffenendstück mit einem Dichtungsring auf der Innenseite ausgelegt ist, das Zapfenendstück eine äußere Struktur (3) aufweisend, die in Umfangsrichtung in alternierender Weise radial einwärts angeordnete Abschnitte (4) und relativ zu diesen einwärts angeordneten Abschnitten (4) radial nach außen gerichtete Ausstülpungen (5) aufweist, wobei jede der Ausstülpungen (5) sich an mindestens einem Punkt mit einem imaginären Kegel (6) überschneidet, der seine Achse mit der Achse des Rohrteils (1) teilt und der seinen Fuß das Rohrteil (1) durchkreuzen lässt, mindestens eine der Ausstülpungen (5) einer Ausstülpungsform eine Diskrepanz zu der Form des imaginären Kegels (6) aufweisend, wobei die äußere Endstruktur (3) mit mindestens einem Endzustandsanzeiger (9) zum Bereitstellen fühlbaren und/oder hörbaren Feedbacks für eine Person, wenn das Einführen des Zapfenendstücks (2) in die Rohrmuffe einen Endzustand erreicht hat, bereitgestellt ist und wobei der Endzustandsanzeiger (9) mindestens einen axial ausgerichteten Vorsprung oder eine axial ausgerichtete Aussparung umfasst.

2. Rohrteil (1) gemäß Anspruch 1, bei dem jede der Ausstülpungen (5) eine Ausstülpungsform aufweist, die eine Diskrepanz zu der Form des imaginären Kegels (6) aufweist.

3. Rohrteil (1) gemäß Anspruch 1 oder 2, bei dem ein Teil der Ausstülpungsform mit einem Teil einer zylindrischen Oberfläche (CS) übereinstimmt.

4. Rohrteil (1) gemäß einem der vorstehenden Ansprüche, bei dem ein Querschnitt der Ausstülpungsform quer zur Axialrichtung des Rohrteils (1) einen Bogen, vorzugsweise einen Teil eines Kreises, aufweist.

5. Rohrteil gemäß einem der vorstehenden Ansprüche, bei dem ein Querschnitt der Ausstülpungsform radial entlang der Axialrichtung des Rohrteils (1) einen Bogen, vorzugsweise einen Teil eines Kreises, aufweist.

6. Rohrteil (1) gemäß einem der vorstehenden Ansprüche, bei dem das Zapfenendstück (2) proximal von der äußeren Endstruktur (3) eine äußere Oberfläche in Form eines Zylinders aufweist.

7. Rohrteil (1) gemäß einem der vorstehenden Ansprüche, bei dem jede Ausstülpung (5) formgleich ist.

8. Rohrteil (1) gemäß einem der vorstehenden Ansprüche, bei dem mindestens einer der radial einwärts angeordneten Abschnitte (4) eine Durchgangsöffnung aufweist.

9. Rohrteil (1) gemäß einem der vorstehenden Ansprüche, bei dem mindestens einer der radial einwärts angeordneten Abschnitte (4) eine Oberfläche aufweist, die sich in distaler Richtung radial nach innen erstreckt.

10. Rohrteil (1) gemäß einem der vorstehenden Ansprüche, bei dem mindestens einer der radial einwärts angeordneten Abschnitte (4) eine ebene Fläche aufweist.

11. Rohrteil (1) gemäß einem der vorstehenden Ansprüche, bei dem mindestens einer der radial einwärts angeordneten Abschnitte (4) eine bogenförmige Fläche aufweist.

12. Rohrteil (1) gemäß einem der vorstehenden Ansprüche, bei dem die äußere Endstruktur (3) aus einem gefalzten oder gebogenen blechförmigen Metall hergestellt ist.

13. Verfahren zum Herstellen eines Rohrteils (1) gemäß einem der vorstehenden Ansprüche, wobei das Verfahren das Formen eines blechförmigen Metalls zum Herstellen der äußeren Endstruktur (3) umfasst.

## Revendications

1. Partie de tuyau (1) dotée d'une partie d'extrémité à bout uni (2) qui est conçue pour s'insérer dans une partie d'extrémité de douille comprenant à l'intérieur une bague d'étanchéité, la partie d'extrémité à bout uni comprenant une structure d'extrémité extérieure (3) qui comprend dans une direction circonférentielle de manière alternée des sections (4) situées radialement rentrantes et, par rapport à ces sections (4) situées rentrantes, des protubérances (5) dirigées radialement sortantes, dans laquelle chacune des protubérances (5) coïncide à au moins un point avec un cône imaginaire (6) qui partage son axe avec l'axe de la partie de tuyau (1) et dont la base traverse la partie de tuyau (1), au moins l'une des protubérances (5) ayant une forme de protubérance qui ne concorde pas avec la forme du cône imaginaire (6), dans laquelle la structure d'extrémité extérieure (3) est prévue avec au moins un indicateur de stade final (9) pour fournir un retour tactile et/ou audible à une personne lorsque l'insertion de la partie d'extrémité à bout uni (2) dans la douille a atteint un stade final et dans laquelle l'indicateur de stade final (9) comprend au moins une saillie ou cavité dirigée de manière axiale.

2. Partie de tuyau (1) selon la revendication 1, dans laquelle chacune des protubérances (5) a une forme de protubérance qui ne concorde pas avec la forme du cône imaginaire (6).

3. Partie de tuyau (1) selon la revendication 1 ou 2, dans laquelle une partie de la forme de protubérance concorde avec une partie d'une surface cylindrique (CS).

4. Partie de tuyau (1) selon l'une quelconque des revendications précédentes, dans laquelle une section transversale de la forme de protubérance, prise à travers la direction axiale de la partie de tuyau (1) comprend une courbe, de préférence une partie d'un cercle.

5. Partie de tuyau selon l'une quelconque des revendications précédentes, dans laquelle une section transversale de la forme de protubérance, prise radialement le long de la direction axiale de la partie de tuyau (1) comprend une courbe, de préférence une partie d'un cercle.

6. Partie de tuyau (1) selon l'une quelconque des revendications précédentes, dans laquelle la partie d'extrémité à bout uni (2) proximale à la structure d'extrémité extérieure (3) comprend une surface extérieure ayant la forme d'un cylindre.

7. Partie de tuyau (1) selon l'une quelconque des revendications précédentes, dans laquelle les protubérances (5) ont des formes identiques.

8. Partie de tuyau (1) selon l'une quelconque des revendications précédentes, dans laquelle au moins l'une des sections (4) situées radialement rentrantes comprend une ouverture traversante.

9. Partie de tuyau (1) selon l'une quelconque des revendications précédentes, dans laquelle au moins l'une des sections (4) situées radialement rentrantes comprend une surface qui s'étend dans une direction distale de manière radialement rentrante.

10. Partie de tuyau (1) selon l'une quelconque des revendications précédentes, dans laquelle au moins l'une des sections (4) situées radialement rentrantes comprend une surface plate.

11. Partie de tuyau (1) selon l'une quelconque des revendications précédentes, dans laquelle au moins l'une des sections (4) situées radialement rentrantes comprend une surface courbée.

12. Partie de tuyau (1) selon l'une quelconque des revendications précédentes, dans laquelle la structure d'extrémité extérieure (3) est réalisée en un métal en forme de feuille pliée ou déformée.

13. Procédé destiné à produire une partie de tuyau (1) selon l'une quelconque des revendications précédentes, dans lequel le procédé comprend la formation d'un métal en forme de feuille pour réaliser la structure d'extrémité extérieur (3).
